# EUROPEAN PATENT SPECIFICATION

(11) **EP 1 936 251 B1**
(45) Date of publication and mention of the grant of the patent: **16.03.2011**
(21) Application number: 06026185.6
(22) Date of filing: 18.12.2006
(51) Int. Cl.: F16L 37/091

(54) **Tube coupling device**
Rohrkupplungsvorrichtung
Dispositif de raccord de tuyau

(43) Date of publication of application: 25.06.2008
(73) Proprietor: SNC, JungrangGu Seoul (KR)
(72) Inventor: Rea, Kim Gee, Bucheon GyongGI (KR)
(74) Representative: Kloiber, Thomas

(56) References cited:
- EP-A- 0 933 579
- EP-A- 1 209 404
- EP-A1- 0 160 559
- EP-A1- 0 751 334
- EP-A1- 0 890 774

## Description

The present invention relates to a tube coupling device comprising a coupling sleeve with a persistent axial bore and having a longitudinal axis, therein a bushing for loosening a coupled tube and a tube locking element to be placed around a tube.

Tube coupling devices are used in a large variety of technical fields wherever it is necessary to couple and decouple tubes in a secure and fast manner. The tubes are normally used as conducts for liquids, e.g. beverages, processed or non-processed. In such a tube coupling device the end of a tube may be pushed into the coupling through the axial bore of the coupling sleeve with the tube locking element preventing any later outward pull of the tube by means of engagement between the tube locking element, the coupling sleeve and the tube. This arrangement thus gives a form of coupling in which the end of the tube can be inserted directly into the coupling device and is engaged thereby in a manner which prevents withdrawal of the tube nearly by any pull thereon. The tube can be released however by pushing the bushing inwardly into the coupling sleeve whilst pulling the tube outwardly. The release of the tube can therefore only be affected by a deliberate action and not by accidental pull on the tube.

In the state of the art, EP 0 939 267 B1 discloses a tube locking element in form of a bushing with resilient arms bearing a plurality of first retaining elements. These first retaining elements are provided at the inner surface of the bushing near the free end of the resilient arms. They have a saw teeth form, pointing to each other and engaging with the outer surface of a tube pushed into the bushing. The retaining elements are made of the same material as the tube locking element itself.

EP 0 976 961 B1 discloses a device for coupling tubes with a coupling sleeve, a cylindrical element with first retaining means engaging with the inner surface of the coupling sleeve. These retaining means are in the form of a seperate v-shaped steel ring located at the inclined cam area. One blade of the steel ring points outwardly to engage with the inner wall of coupling sleeve. The cylindrical element further comprises an inclined cam area, engaging with a corresponding groove of a cylindrical bushing. The cylindrical bushing has resilient arms which contact the outer surface of an inserted tube. By pulling the tube outwardly, the resilient arms of the bushing press against the inclined cam area which itself presses the steel ring against the inner surface of the coupling sleeve. Thus, this coupling device requires seperately produced and inserted steel rings and is therefore not easy to assemble.

EP 0 890 774 B1 discloses a moulded cylindrical bushing with several resilient arms located within a coupling sleeve. There are annular metal elements provided which are snapped around the free ends of the resilient arms of the cylindrical bushing. These annular elements have resilient arms, too, pointing inwardly to engage with the surface of a tube which extents itself through the cylindrical bushing. They may also have means to engage with the outer surface of the bushing in order to prevent them from being disengaged by pulling the bushing out of the coupling sleeve. Each annular element is made up of spring steel and has to be clipsed separately around each resilient arm.

EP 1 209 404 A1 discloses a tube coupling device with a coupling sleeve with a persistant axial bore and a longitudinal axis, therein a bushing for losening a coupled tube and a tube locking element to be placed around a tube, whereby the tube locking element containes first retaining means pointing towards the longitudinal axis and second retaining means pointing away from the longitudinal axis, whereby the tube locking element with first and second retaining means together form one integral part and wherein the first retaining means consist of an annular gear, its teeth being swivel-mounted within the main body, with its swivel axis located within the main body and whereby first and second retaining means are made up of metal and the tube locking element is made up of plastics, and that the tube locking element is formed by insertion moulding around parts of first and second retaining means.

EP 0 160 559 A1 discloses a tube coupling device with first retaining means consisting of an annular gear made of metal and a separate second annular gear made of plastics, being part of a main body.

Thus, in the state of the art, only complex tube coupling device are described. There has been a long felt need for those skilled in the art for a coupling device which has a simple structure, improves the bonding performance between the tube, the tube locking element and the coupling sleeve during tube connection and which prevents leackage by preventing foreign matters from being caught between the parts.

An object of the invention is therefore to provide a coupling device which has a simple structure, is therefore easy to produce and which improves the bonding performance between the tube, the tube locking element and the coupling sleeve.

This object is solved by a coupling device according to claim 1.

Surprisingly, these features lead to a tube connecting device with a simple structure, being easy to produce and nevertheless guaranteeing a secure engagement between the coupling device and the tube as well as a high degree of leakage preventing. Since first and second retaining means together with the tube locking element form one integral part, the number of parts of the inventive tube coupling device to be assembled is minimised. Thus, the manufacturing process is simplified leading to lower production costs. Due to the less number of movable parts, fewer surfaces have to be sealed. This allows with great advantage to build connecting devices for pipes with diameters of 0,5" (12,7 mm) onwards, which was not possible up to the present invention. The tube locking element comprises a main body having areas of enhanced wall thickness, in particular alternating with areas of reduced wall thickness and/or has abutments for the first retaining means. This embodiement does not only reduce the weight of the inventive coupling device but also provides areas, in which forces may be securely transferred from the retaining means into the tube locking element. Abutments delimitate the stroke of the retaining means and thereby prevent the inventive device from being damaged. The first retaining means consist of an annular gear, its tooth being swivel-mounted within the main body, in particular with its swivel axis located within the main body. By a swivel-mount of the retaining means, they may tightly fit to the outer surface of a tube inserted and may retain it from being pulled out by carving into the tube material. If the swivel-axis is located within the main body, the forces effected on the tooth are forwarded into the main body in a secure manner. The teeth have a swivel-stroke which is delimited by the abutment and/or in which the annular gear consist of a small tape which meanders to form spaced triangle-type teeth being connected to each other at their respective basis and/or in which the basis is inclined with regard to the tooth. This embodiments guarantees robust and stable first retaining means without the need of a compact annular gear. The small tape meanders, thus interconnecting each tooth to the adjecent teeth and allows simultaneously to adopt the geometric shape of the teeth and basis to different requirements as may result from different tube diameters, tube wall materials and alike. It is within the scope of this invention to use different geometrical shapes within a single annular gear and also to use tape with areas of different width. For example, the width of the tape may be enlarged around the tip of the triangle or at the basis.

If the second retaining means consist of a plurality of L-shaped pieces, in particular if they are arranged in the areas of enhanced wall thickness of the main body, they are guided within the main body in a secure way. The longer blade of the L points away from the longitudinal axis thus may be used to secure the tube locking element to the inner surface of the coupling sleeve and to prevent the tube locking element from being pulled out of the coupling sleeve. The shorter blade is incorporated in the main body providing a stable achorage for the second retaining means.

Especially if first and/or second retaining means are made up of metal and the tube locking element is made up of plastics, particularly thermoplastics, the manufacturing is simplified without lowering the retaining capacity of the tube locking element.

The tube locking element is formed by injection moulding, particularly insertion moulding. This well-established manufacturing method allows for fast production and for combination of different materials.

The following is a description of a preferred embodiement of the invention. Reference being made to the accompanying drawings in which:
- Fig. 1:: is a cross section of a coupling device according to this invention with an inserted tube
- Fig. 2:: is a cross section of the tube locking element inserted in the coupling sleeve,
- Fig. 3:: is a perspective view of the tube locking element according to this invention together with one of the bushing,
- Fig. 4:: is a plain view of the tube locking element and
- Fig. 5a-c:: are cross sections of various conditions of the tube locking element.

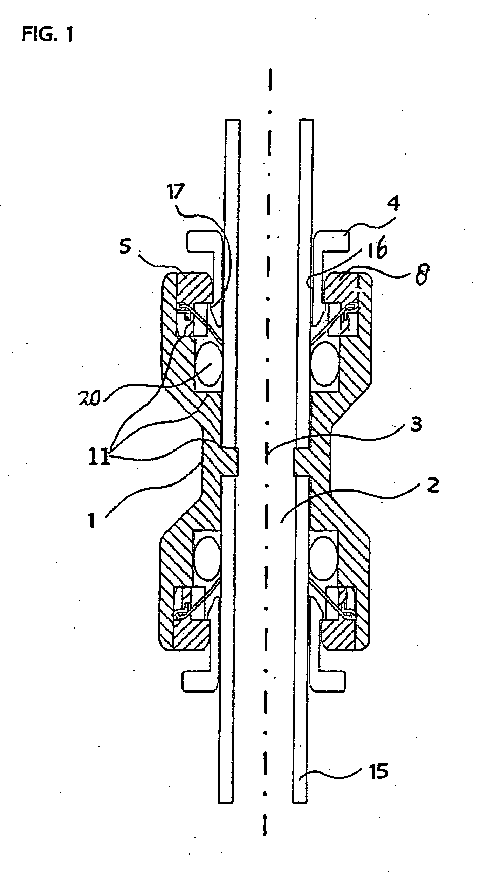

Referring now to Fig. 1, a coupling sleeve 1 is shown, which has a persistant axial bore 2 and a longitudinal axis 3. The coupling sleeve 1 is symmetrical and provided to couple two tubes 15. The axial bore 2 is provided as stepped bore, it therefore contains areas with different internal diameters, the largest diameters are provided near both ends of the coupling sleeve. The steps of the stepped bore are used as abutments 11 for the tubes 15, for a sealing ring 20 and for the tube locking element 5. The sealing ring 20 is usually an O-ring, which prevents leakage of circulating fluid. Fig. 1 also shows the bushing 4, which is used to unfix the tube 15 by pressing the bushing 4 into the coupling sleeve 1, thereby bending the first retaining means in a way to disengage with the outer surface of tube 15. Bushing 4 contacts tube 15 with its cylindrical part 16. On the outer surface of that cylindrical part 16 there is provided a cam 17 which interacts with the tube locking element 5.

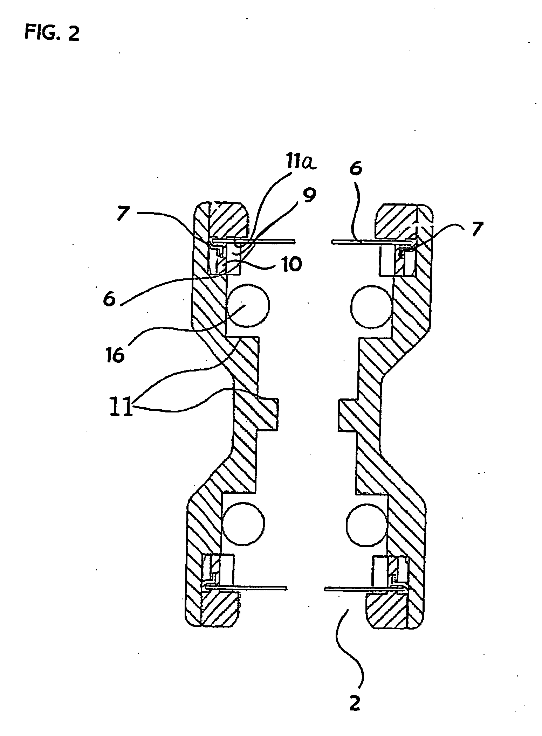

Turning now to Fig. 2, the tube locking element is shown inserted in the coupling sleeve 1. The main body 8 of the tube locking element comprises first retaining means 6 and second retaining means 7. It has a cylindrical shape and areas of enhanced wall thickness 9 and of reduced wall thickness 10. As can be seen from Fig. 1 and 2, the first retaining means 6 may swivel around a swivel axis located within the tube locking element. An abutment 11a is provided by the outer part of the tube locking element, thus, the first retaining means 6 may not swivel beyond their idle position. As can be seen from Fig. 2, the first retaining means are incorporated in the main body 8 near their outer end in an area of reduced wall thickness 10. Second retaining means 7 are also depicted. They are in form of a L, with the shorter blade being incorporated in the main body at areas with enhanced wall thickness 9. Hereby, the bonding strength between the second retaining means 7 and the main body is enhanced. The blade pointing away from the longitudinal axis 3 may have an inclined end as shown. The second retaining means 6 dig into the inner wall of coupling sleeve 1, thereby preventing the separation of the tube locking element 5 and the coupling sleeve 1.

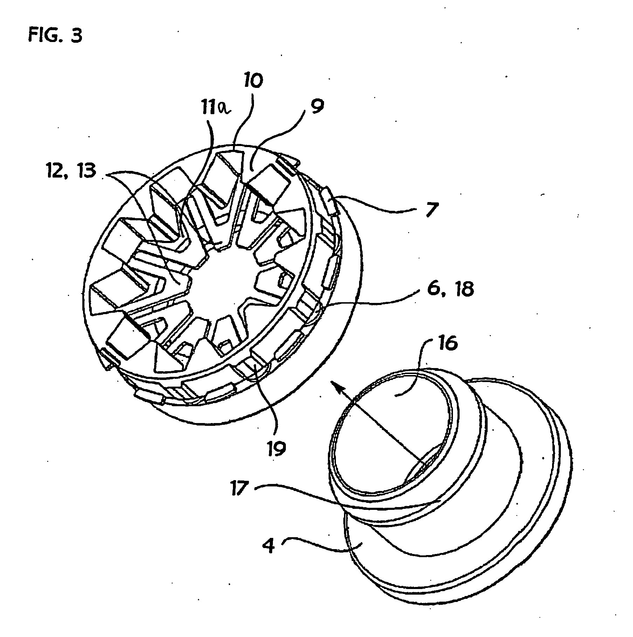

Fig. 3 shows a perspective view of the tube locking element and the bushing 4. The main body 8 is made of thermoplastics, whereas the first retaining means 6 and the second retaining means 7 are made up of metal. Tube locking element is manufactured by insertion moulding, e.g. moulding thermoplastics around the metal parts. The first retaining means 6 consist of an annular gear 12 in form of a small tape meandring to form triangle shaped teeth 13 and connecting basis 18. The thermoplastic material is molded near the basis 18, whereby basis 18 and teeth 13 may include an angle other than 180°. Furthermore, the width of the tape may change in different areas of the annular gear 12. For example, near the tip of the teeth 13, the width may be larger than in the area of the basis 18. According to the invention, reinforcements 19 are provided in the main body at those areas, where the basis 18 is incorporated in the main body. The abutment 11 and the areas of enlarged wall thickness serve as guiding means for the teeth, thus controlling their stroke.

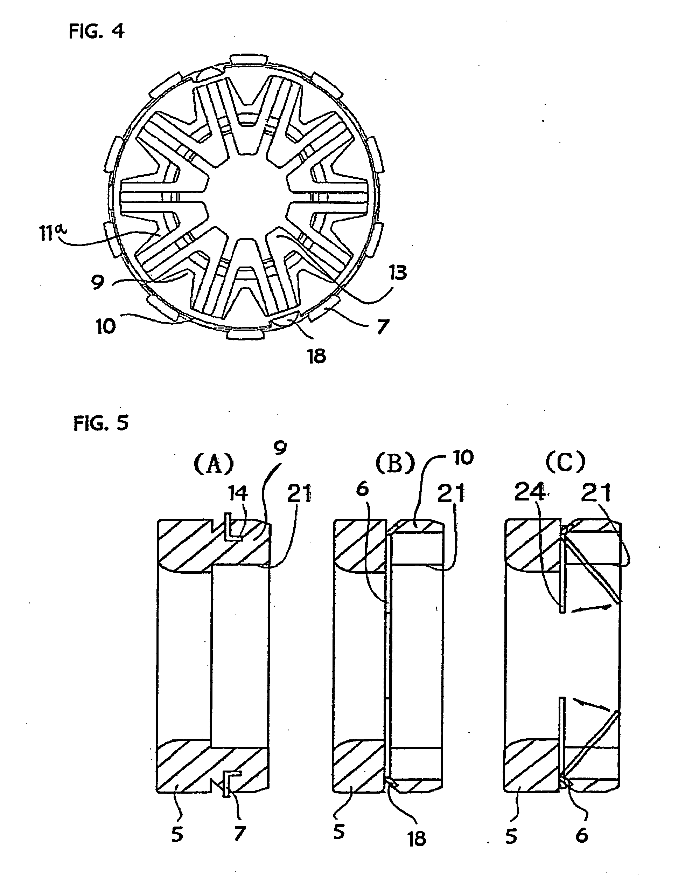

Fig. 4 shows a plain view of the tube locking element, with teeth 13, basis 18, a blade of the second retaining elements 7 and the abutment 11 for the swivel stroke of teeth 13.

Fig. 5a-c finally show three sectional views of the tube locking element 5 with second retaining means 7 and first retaining means 6. In areas, in which the second retaining means 7 are provided, the main body shows an enhanced wall thickness 9. In these areas, no teeth 13 of the first retaining means 6 are provided. Fig. 5b shows the first retaining means 6 in their idle position without any tube 15 inserted. The angle enclosed between teeth 13 and basis 18 is shown. In Fig. 5c, the swivel stroke of teeth 13 is shown, which is conducted whenever a tube 15 enters the inventive tube locking element 5.

The assembly of the inventive coupling device consists of the steps: inserting the O-ring 20 into the coupling sleeve 1 to abut against abutment 11, forcibly inserting the tube locking element 5 into the axial bore 2 of the coupling sleeve 1. Hereby, the second retaining means 7 are pressing themselves against the inner wall of the coupling sleeve 1, preventing the tube locking element 5 from being pulled out of the coupling sleeve 1. This is possible, since the second retaining means 7 are protruding beyond the outer circumference of the main body. Next, the bushing 4 is inserted into the central opening of tube locking element 5. The cams 17 provided on the outer surface of the cylindrical part 16 engage with the tube locking element 5, wich forms an abutment for the cams 17. In this status, the teeth 13 are swivelled by the bushing 4 at a certain angel as depicted in Fig. 1 or 5c. The teeth 13 are guided by the areas of enhanced wall thickness 9 to achieve a stable swiveling move. Then, tube 15 is inserted into the bushing 4 until it abuts against abutment 11 of the coupling sleeve 1. Tube 15 presses O-ring 20 tightly against the inner wall of the coupling sleeve, thereby achieving a leakage free sealing. Furthermore, teeth 13 are pressing themselves thightly against the outer wall of tube 15 and hereby digging themselves into the wall. By doing so, they prevent tube 15 from being pulled out of the coupling device 1. For loosening the coupling, bushing 4 is pushed into the central bore 2, hereby interrupting the contact of teeth 13 with tube 15, so that the latter may be easily withdrawn from the coupling sleeve 1.

With the inventive coupling device, tubes with diameters of more than 0,5" (12,7 mm) may be coupled leakage free, which was not possible before. This is mainly due to the reduced number of parts in the coupling device and the reduced number of necessary seals.

## Claims

1. Tube coupling device comprising a coupling sleeve (1) with a persistent axial bore (2) and having a longitudinal axis (3), therein a bushing (4) for loosening a coupled tube and a tube locking element (5) to be placed around a tube,
whereby the tube locking element (5) contains first retaining means (6) pointing towards the longitudinal axis (3) and second retaining means (7) pointing away from the longitudinal axis (3), whereby the tube locking element (5) with first and second retaining means (6, 7) together form one integral part and wherein the first retaining means (6) consist of an annular gear (12), its teeth (13) being swivel-mounted within a main body (8) of the tube locking elements (5), with its swivel axis located within the main body (8) and whereby first and second retaining means (6, 7) are made up of metal and the main body (8) is made up of thermoplastics, and in that the tube locking element (5) is formed by insertion moulding around parts of first and second retaining means (6, 7) **characterized in that** the main body (8) has areas of enhanced wall thickness (9), circumferentially alternating with areas of reduced wall thickness (10) and has an abutment (11a) for the first retaining means (6), both the abutment (11a) and the areas of enhanced wall thickness (9) serving as guiding means for the teeth (13).

2. Coupling device according to claim 1, in which the annular gear (12) consist of a small tape which meanders to form spaced triangle-type teeth (13) being connected to each other at their respective basis (18) and/or in which the basis (18) is inclined with regard to the tooth (13).

3. Coupling device according to one of the preceeding claims, in which the second retaining means (7) have an L-shape with one blade (14) pointing away from the longitudinal axis (3).

4. Coupling device according to one of the preceeding claims, in which the second retaining means (7) consist of a plurality of L-shaped pieces, in particular being arranged in the areas of enhanced wall thickness (9).

5. Coupling device according to at least claim 2, in which the width of the tape is enlarged around the tip of the triangle or at the basis (18).

## Patentansprüche

1. Rohrkupplungsvorrichtung, umfassend eine Kupplungsmuffe (1) mit einer durchgehenden axialen Bohrung (2) und einer Längsachse (3), in der sich eine Buchse (4) zum Lösen eines angekuppelten Rohrs und ein Rohrsperrelement (5) zum Anordnen um ein Rohr befinden, wobei das Rohrsperrelement (5) erste Haltemittel (6), die zur Längsachse (3) hin deuten, und zweite Haltemittel (7) enthält, die von der Längsachse (3) weg deuten, wobei das Rohrsperrelement (5) mit ersten und zweiten Haltemitteln (6, 7) zusammen ein einstückiges Teil bildet, und wobei die ersten Haltemittel (6) aus einem Zahnring (12) bestehen, dessen Zähne (13) schwenkbar innerhalb eines Hauptkörpers (8) des Rohrsperrelements (5) angebracht sind, wobei sich ihre Schwenkachse innerhalb des Hauptkörpers (8) befindet, und wobei die ersten und zweiten Haltemittel (6, 7) aus Metall gebildet sind und der Hauptkörper (8) aus Thermoplast gebildet ist und das Rohrsperrelement (5) durch Insertionsspritzguss um Teile der ersten und zweiten Haltemittel (6, 7) ausgebildet ist, **dadurch gekennzeichnet, dass** der Hauptkörper (8) Bereiche mit erhöhter Wandstärke (9) aufweist, die sich umfänglich mit Bereichen mit verringerter Wandstärke (10) abwechseln, und ein Widerlager (11a) für die ersten Haltemittel (6) aufweist, wobei das Widerlager (11a) sowie die Bereiche mit erhöhter Wandstärke (9) als Führungsmittel für die Zähne (13) dienen.

2. Kupplungsvorrichtung nach Anspruch 1, wobei der Zahnring (12) aus einem kleinen Band besteht, das zum Ausbilden von beabstandeten, dreieckartigen Zähnen (13) mäandert, die an ihrer jeweiligen Grundfläche (18) miteinander verbunden sind, und/oder wobei die Grundfläche (18) bezüglich des Zahns (13) geneigt ist.

3. Kupplungsvorrichtung nach einem der vorhergehenden Ansprüche, wobei die zweiten Haltemittel (7) eine L-Form aufweisen, bei der ein Blatt (14) von der Längsachse (3) weg deutet.

4. Kupplungsvorrichtung nach einem der vorhergehenden Ansprüche, wobei die zweiten Haltemittel (7) aus mehreren L-förmigen Stücken bestehen, die insbesondere in den Bereichen mit erhöhter Wandstärke (9) angeordnet sind.

5. Kupplungsvorrichtung nach zumindest Anspruch 2, wobei die Breite des Bands um die Spitze des Dreiecks oder an der Grundfläche (18) vergrößert ist.

## Revendications

1. Dispositif de couplage de tube comprenant un manchon de couplage (1) avec un alésage axial persistant (2)et comportant un axe longitudinal (3), à l'intérieur de celui-ci une bague de réduction (4) pour desserrer un tube couplé et un élément de verrouillage de tube (5) à placer autour d'un tube, moyennant quoi l'élément de verrouillage de tube (5) contient un premier moyen de rétention (6) pointant vers l'axe longitudinal (3) et un second moyen de rétention (7) se détournant de l'axe longitudinal (3), moyennant quoi l'élément de verrouillage de tube (5) avec un premier et un second moyens de rétention (6, 7) forme conjointement une partie en un seul tenant et dans lequel le premier moyen de rétention (6) consiste en un anneau dentée (12), ses dents (13) étant montées sur pivot à l'intérieur d'un corps principal (8) de l'élément de verrouillage de tube (5), avec son axe de pivot situé à l'intérieur du corps principal (8) et moyennant quoi un premier et un second moyen de rétention (6,7) sont constitués de métal et le corps principal (8) est constitué de thermoplastique, et en ce que l'élément de verrouillage de tube (5) est formé par moulage avec insertion autour de parties du premier et du second moyen de rétention (6, 7), **caractérisé en ce que** le corps principal (8) comporte des zones d'épaisseur de paroi améliorée (9), alternant circonférentiellement avec des zones d'épaisseur de paroi réduite (10) et comporte une butée (11a) destinée au premier moyen de rétention (6), à la fois la butée (11a) et les zones d'épaisseur de paroi améliorée (9) servant de moyens de guidage pour les dents (13).

2. Dispositif de couplage selon la revendication 1, dans lequel l'anneau dentée (12) est constitué d'une petite bandelette qui serpente afin de former des dents de type triangle espacées (13) étant raccordées les unes aux autres à leurs bases respectives (18) et/ou dans lequel la base (18) est inclinée par rapport à la dent (13).

3. Dispositif de couplage selon une des revendications précédentes, dans lequel le second moyen de rétention (7) possède une forme en L avec une lame (14) se détournant de l'axe longitudinal (3).

4. Dispositif de couplage selon une des revendications précédentes, dans lequel le second moyen de rétention (7) est constitué d'une pluralité de pièces en forme de L, étant en particulier disposées dans les zones d'épaisseur de paroi améliorée (9).

5. Dispositif de couplage selon au moins la revendication 2, dans lequel la largeur de la bandelette est élargie autour de la pointe du triangle ou à la base (18).
